**Europäisches Patentamt**

**European Patent Office**

**Office européen des brevets**

(11) Veröffentlichungsnummer: **0 347 575**
A2

## (12) EUROPÄISCHE PATENTANMELDUNG

(21) Anmeldenummer: 89108554.0

(51) Int. Cl.⁴: **B60C 11/11**

(22) Anmeldetag: 12.05.89

(30) Priorität: 22.06.88 DE 8807996 U

(43) Veröffentlichungstag der Anmeldung:
27.12.89 Patentblatt 89/52

(84) Benannte Vertragsstaaten:
AT BE CH DE ES FR GB GR IT LI LU NL SE

(71) Anmelder: **Continental AG**
**Königsworther Platz 1 Postfach 1 69**
**D-3000 Hannover 1(DE)**

(72) Erfinder: **Evertz, Karlheinz**
**Gut Forensberg 17a**
**D-5120 Herzogenrath-Kohlscheid(DE)**

(54) **Fahrzeugluftreifen.**

(57) Die Erfindung bezieht sich auf einen Fahrzeugluftreifen, bei dem das Lauffächenprofil (1) aus mehreren axial benachbarten, durch Umfangsrillen (10, 11) getrennten, in Umfangsrichtung verlaufenden Profilrippen (2 bis 8) besteht, die schräg zur Umfangsrichtung (x-x) orientierte Feineinschnite (12, 13) aufweisen. Um verschiedene Reifeneigenschaften, wie Naßrutschfestigkeit, Traktion, gleichmäßiger Abrieb und Laufruhe zu verbessern, wird vorgeschlage, daß die durch gestufte Feineinschnitte (12, 13) gebildeten Rippenprofilglieder (14, 15; 24, 25; 34, 35) runenförmig ausgebildet und derart angeordnet sind, daß in der laufflächenmittigen Profilrippe (2) und in den Schulterprofilrippen (5, 6) ein Profilglied (14 bzw. 34) mit über der parallel zur Umfangsrichtung vorliegenden Rippenseitenkante (20 bzw. 32) überstehendem nasenförmigen Gliedabschnitt (16 bzw. 36) einem weiteren Profilglied (15 bzw. 35) mit über der parallel zur Umfangsrichtung vorliegenden Rippenseitenkante (21 bzw. 33) überstehendem nasenförmigen Gliedabschnitt (17 bzw. 37) benachbart ist, wobei deren Umrisse im wesentlichen gleich, jedoch im 180° zueinander gedreht vorliegen, und daß in den diesen Profilrippen benachbarten Profilrippen (3, 4) ein Profilglied (24) mit über der parallel zur Umfangsrichtung vorliegenden Rippenseitenkante (33) überstehendem nasenförmigen Gliedabschnitt (26) jeweils einem gestuften Profilglied (25) mit parallel zur Umfangsrichtung vorliegenden Rippenseitenkanten (29) benachbart ist, wobei die Umrisse der Profilglieder (25) im wesentlichen gleich, jedoch um 180° zueinander gedreht vorliegen, und daß die in die jeweilige Umfangsrille (10, 11) seitlich vorspringend angeordneten nasenförmigen Gliedabschnitte (16, 17; 36, 37) entsprechend ausgebildeten Ausnehmungen (30, 31) in der benachbarten Profilrippe (3, 4; 5, 6; 7, 8) gegenüberliegend angeordnet sind.

## Fahrzeugluftreifen

Die Erfindung betrifft einen Fahrzeugluftreifen nach dem Oberbegriff des Anspruchs 1.

Bei einem Fahrzeugluftreifen mit einem Laufflächenprofil, das aus Umfangsrippen besteht, die durch Umfangsrillen voneinander getrennt sind und die durch schräg zur Umfangsrichtung orientierte Feineinschnitte gegliedert sind, ist es Aufgabe der Erfindung, die durch die Feineinschnitte aufgeteilten Profilrippen in den Eigenschaften Naßrutschfestigkeit, Traktion, gleichmäßiger Abrieb und Laufruhe gegenüber Reifen mit einem gattungsgemäßen Laufflächenprofil zu verbessern.

Erfindungsgemäß wird die Aufgabe dadurch gelöst, daß die durch gestufte Feineinschnitte gebildeten Rippenprofilglieder eine runenförmige Aufstandsfläche aufweisen und in Umfangsrichtung derart angeordnet sind, daß deren nasenförmiger Gliederabschnitt abwechselnd rechts und links in den im wesentlichen geraden Umfangskanälen vorsteht, wobei einem vorspringenden Gliederabschnitt eine Ausnehmung gegenüber angeordnet ist.

Es liegt ein feingliedriges, durch die Umfangsteilung von Vierundsechzigstel gebildetes Profil mit starker Querlamellierung vor. Bevorzugt besteht es aus sieben Umfangsrippen mit einem Aufstandsflächenanteil, der im wesentlichen gleich dem Negativanteil der Rillen ist. Durch die Querlamellierung wird die Naßrutschfestigkeit verbessert, wobei die Schrägorientierung der Feineinschnitte in der Richtung von Rippe zu Rippe wechselt.

Durch den nasenförmigen Ansatz des Rippengliedes erhalten die Rippen und Rillen einen Versatz, der gute Traktion gewährleistet. Die Form der Rippenglieder und deren durch die Feineinschnitte gegliederte Anordnung ergibt Umfangsrippen, die gleichmäßigen Abrieb und geringes Reifengeräusch gewährleisten.

An Hand eines Ausführungsbeispiels ist die Erfindung erläutert. Die Zeichenfigur zeigt eine Aufsicht auf das Laufflächenprofil 1 eines Fahrzeugluftreifens.

Das Profil besteht aus einer in der Laufflächenmitte angeordneten Umfangsrippe 2, den rechts und links benachbart angeordneten, durch Umfangsrillen 10 getrennten Umfangsrippen 3 und 4 und den in den Reifenschultern angeordneten Umfangsrippen 5 und 6, die jeweils durch Umfangsrillen 11 von den in die Reifenschulter übergehenden Umfangsrippen 7 und 8 getrennt sind.

Die Profilrippen bestehen im wesentlichen aus durch die gestuften Feineinschnitte 12, 13 gebildeten runenförmigen Rippenglieder. In der Mittenrippe 2 sind zwei Rippenglieder 14, 15 vorhanden. Die runenförmige Aufstandsfläche ist jeweils durch einen nasenförmigen Gliedabschnitt 16, 17 erweitert. Diese Rippenglieder sind in Umfangsrichtung benachbart, wobei sie in der um 180° gedrehten Anordnung aneinanderliegen und so eine Rippe mit wechselnd rechts und links vorliegendem Versatz bilden.

Die parallel zur Umfangsrichtung verlaufenden Rippenseitenkanten sind mit 20, 21 bezeichnet. Die Umfangsteilung t beträgt 1/64.

Die Umfangsrippen 3, 4 bestehen aus den Rippengliedern 24, 25. Deren runenförmige Aufstandsfläche ist jeweils an dem Rippenglied 24 durch einen nasenförmigen Gliedabschnitt 26 erweitert. Diesem sind in und entgegen der Umfangsrichtung die Rippenglieder 25 benachbart, wobei diese in um 180° gedrehter Anordnung vorliegen.

Die parallel zur Umfangsrichtung verlaufenden Rippenseitenkanten sind mit 22, 23 bezeichnet und die entsprechend verlaufenden Rippenseitenkanten der Glieder 25 sind mit 29 bezeichnet.

Die Umfangsrippen 2 und 3 bzw. 4 sind auf Grund ihrer durch die starke Querlamellierung der Feineinschnitte 12, 13, die gleich schräg, jedoch entgegengerichtet angeordnet sind, ausgebildeten Rippenglieder so angeordnet, daß jeweils dem nasenförmigen Gliedersatz 16, 17 ein Ausschnitt an der benachbarten Rippe gegenüberliegt. Diese Ausschnitte sind mit 30, 31 bezeichnet.

Die Umfangsrippen 5, 6 bestehen aus den Rippengliedern 34, 35. Deren runenförmige Aufstandsfläche ist jeweils durch einen nasenförmigen Gliedabschnitt 36, 37 erweitert. Diesen Gliedabschnitten liegt jeweils ein Ausschnitt an der benachbarten Rippe gegenüber. Diese Ausschnitte sind mit 38, 39 bezeichnet.

Die schulterseitig äußeren Rippen 7, 8 sind aus Gründen der Anordnung in der Reifenschulter weniger häufig durch Feineinschnitte gegliedert. In der Grundform bilden sie das gleiche Muster wie die übrigen Rippenglieder und ergänzen durch ihre Rippenglieder 40 die Versatzrille 11, die sie von der Rippe 5 bzw. 6 trennt.

Die Dekorelemente 42, 43 sind von dem Rippenprofil der Schulterrippe 7, 8 durch eine Entkopplungsrille 9 getrennt.

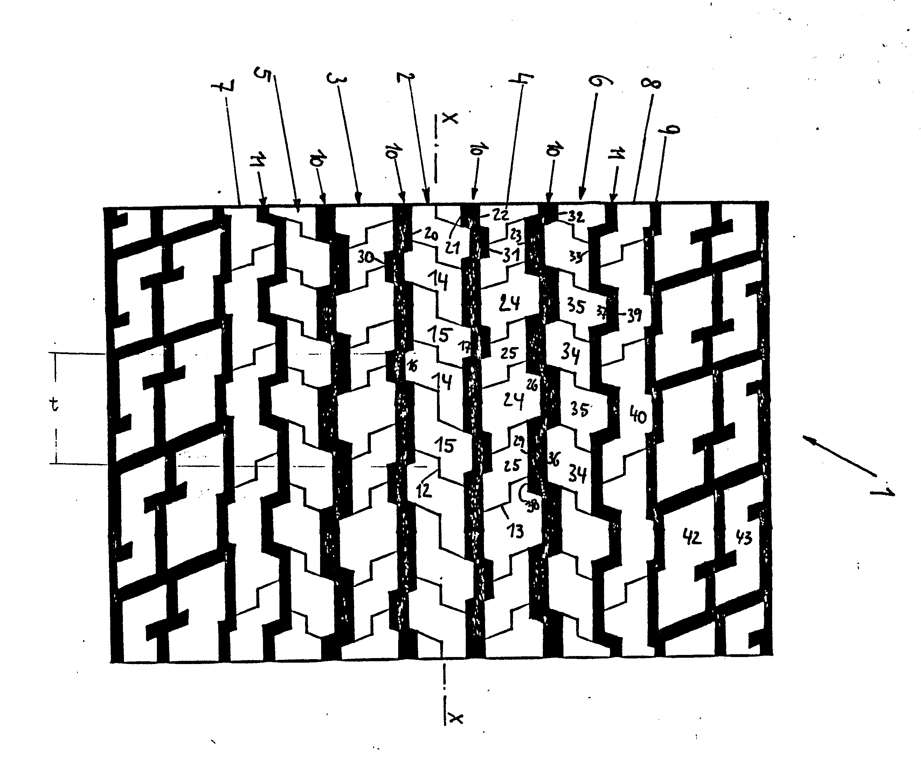

## Ansprüche

1. Fahrzeugluftreifen in Radialkarkassenbauart mit einer gürtelartigen Verstärkung des profilierten Laufstreifens, bei dem das Laufflächenprofil (1) aus mehreren axial benachbarten, durch Umfangsrillen (10, 11) getrennten, in Umfangsrichtung verlaufenden Profilrippen (2 bis 8) besteht, die schräg zur

2

Umfangsrichtung (x-x) orientierte Feineinschnitte (12, 13) aufweisen, dadurch gekennzeichnet, daß die durch gestufte Feineinschnitte (12, 13) gebildeten Rippenprofilglieder (14, 15; 24, 25; 34, 35) runenförmig ausgebildet und derart angeordnet sind, daß in der laufflächenmittigen Profilrippe (2) und in den Schulterprofilrippen (5, 6) ein Profilglied (14 bzw. 34) mit über der parallel zur Umfangsrichtung vorliegenden Rippenseitenkante (20 bzw. 32) überstehendem nasenförmigen Gliedabschnitt (16 bzw. 36) einem weiteren Profilglied (15 bzw. 35) mit über der parallel zur Umfangsrichtung vorliegenden Rippenseitenkante (21 bzw. 33) überstehenden nasenförmigen Gliedabschnitt (17 bzw. 37) benachbart ist, wobei deren Umrisse im wesentlichen gleich, jedoch um 180° zueinander gedreht vorliegen, und daß in den diesen Profilrippen benachbarten Profilrippen (3, 4) ein Profilglied (24) mit über der parallel zur Umfangsrichtung vorliegenden Rippenseitenkante (33) überstehendem nasenförmigem Gleidabschnitt (26) jeweils einem gestuften Profilglied (25) mit parallel zur Umfangsrichtung vorliegenden Rippenseitenkanten (29) benachbart ist, wobei die Umrisse der Profilglieder (25) im wesentlichen gleich, jedoch um 180° zueinander gedreht vorliegen, und daß die in die jeweilige Umfangsrille (10, 11) seitlich vorspringend angeordneten nasenförmigen Gliedabschnitte (16, 17; 36, 37) entsprechend ausgebildeten Ausnehmungen (30, 31) in der benachbarten Profilrippe (3, 4; 5, 6; 7, 8) gegenüberliegend angeordnet sind.

2. Fahrzeugluftreifen nach Anspruch 1, dadurch gekennzeichnet, daß die Profilrippenglieder (14, 15; 24, 25; 34, 35) in einer Umfangsteilung (t) vorliegen, die ein Umfangsvierundsechsigstel beträgt.

3. Fahrzeugluftreifen nach Anspruch 1 und 2, dadurch gekennzeichnet, daß sieben Profilrippen vorliegen.

4. Fahrzeugluftreifen nach Anspruch 1 bis 3, dadurch gekennzeichnet, daß die Feineinschnitte (12) der in Laufflächenmitte und in den Reifenschultern vorliegenden Profilrippe (2, 5, 6) linkssteigend orientiert und die weiteren Feineinschnitte (13) rechtssteigend orientiert sind.